# EUROPÄISCHE PATENTANMELDUNG

(11) **EP 1 455 525 A1**
(43) Veröffentlichungstag der Anmeldung: **08.09.2004**
(21) Anmeldenummer: 03005013.2
(22) Anmeldetag: 05.03.2003
(51) Int. Cl.: H04N 5/232

(54) **Verfahren und Vorrichtung zur Aufnahme von Videodaten**

(71) Anmelder: TELCAST Media Group GmbH, 80805 München (DE)
(72) Erfinder: Hohenacker, Thomas, 82319 Starnberg (DE)
(74) Vertreter: Manitz, Finsterwald & Partner GbR

(57) **Zusammenfassung**

Die Erfindung betrifft ein Verfahren zur Aufnahme von Videodaten mittels wenigstens einer an einem Aufnahmeplatz fest installierten, zu unterschiedlichen Einstellungen ansteuerbaren Kamera, bei dem an einer vom Aufnahmeplatz räumlich entfernt gelegenen Anzeigeeinrichtung ein Bild der Umgebung der Kamera dargestellt wird, durch Auswählen zumindest mehrerer Bildelemente in dem dargestellten Umgebungsbild wenigstens eine Kamerafahrt festgelegt wird, aus den ausgewählten Bildelementen eine Steuerbefehlssequenz für die Kamera erzeugt wird, und die Kamera gemäß der Steuerbefehlssequenz zur Ausführung der Kamerafahrt angesteuert wird.

## Beschreibung

Die Erfindung betrifft ein Verfahren sowie eine Vorrichtung zur Aufnahme von Videodaten mittels wenigstens einer an einem Aufnahmeplatz fest installierten, zu unterschiedlichen Einstellungen ansteuerbaren Kamera.

Bei der Steuerung von Kameras ist es häufig erwünscht, dass eine Kamera automatisch ein vorgegebenes Bewegungsprofil durchläuft, d.h. nacheinander verschiedene vorgegebene Objekte in der Umgebung der Kamera anvisiert, wobei die Bewegungsbahn der Kamera zwischen den einzelnen Objekten, d.h. die einzelnen Kameraschwenks, die Verweildauern auf den Objekten sowie weitere Kameraeinstellungen wie Fokus, Brennweite, Blende etc. ebenfalls bestimmten vorgegebenen Vorstellungen des Bedieners entsprechen sollen.

Für die Festlegung eines bestimmten, im Folgenden auch als Kamerafahrt bezeichneten Bewegungsprofils muss sichergestellt sein, dass der während der Kamerabewegung von der Kamera gesehene Bildausschnitt zu jedem Zeitpunkt mit dem gewünschten Bildausschnitt übereinstimmt. Erfolgt die Festlegung der Kamerafahrt vor Ort, also am Aufnahmeplatz, dann kann der jeweilige Bediener während des Bewegens der Kamera und gegebenenfalls während des Veränderns der Kamerabrennweite, d.h. beim Zoomen, - allgemein also während des Veränderns von Kameraeinstellungen - einfach durch den Sucher der Kamera oder auf einen den momentanen Bildausschnitt anzeigenden Aufnahmemonitor blicken, um die Kameraeinstellungen zu kontrollieren.

Ein derartiges direktes "feed back" ist jedoch nicht immer möglich, wenn die Kamera von einem räumlich entfernt gelegenen Ort aus gesteuert werden soll. Bei der Übertragung von Steuerbefehlen an die Kamera einerseits und von Bilddaten zurück an den Benutzer andererseits kann es zu zeitlichen Verzögerungen der Übertragung kommen, die ein für eine exakte Führung der Kamera erforderliches direktes Ansprechen der Kamera unmöglich machen.

Aufgabe der Erfindung ist es, eine Möglichkeit zur Aufnahme von Videodaten zu schaffen, bei der auf möglichst einfache und zuverlässige Weise eine möglichst exakte und verzögerungsfreie Steuerung der Kamera einschließlich einer genauen Festlegung von Bewegungsprofilen der Kamera sichergestellt ist, wobei dies insbesondere auch von räumlich vom Standort der Kamera entfernt gelegenen Orten aus möglich sein soll.

Die Lösung dieser Aufgabe erfolgt zum einen durch die Merkmale des unabhängigen Verfahrensanspruchs und insbesondere dadurch, dass an einer vom Aufnahmeplatz räumlich entfernt gelegenen Anzeigeeinrichtung ein Bild der Umgebung der Kamera dargestellt wird, durch Auswählen zumindest mehrerer Bildelemente in dem dargestellten Umgebungsbild wenigstens eine Kamerafahrt festgelegt wird, aus den ausgewählten Bildelementen eine Steuerbefehlssequenz für die Kamera erzeugt wird, und die Kamera gemäß der Steuerbefehlssequenz zur Ausführung der Kamerafahrt angesteuert wird.

Die Lösung der der Erfindung zugrunde liegenden Aufgabe erfolgt außerdem durch die Merkmale des unabhängigen Vorrichtungsanspruchs und insbesondere dadurch, dass wenigstens eine an einem Aufnahmeplatz fest installierte, zu unterschiedlichen Einstellungen ansteuerbare Kamera, eine vom Aufnahmeplatz räumlich entfernt gelegene Anzeigeeinrichtung, an der ein Bild der Umgebung der Kamera darstellbar ist, eine Auswahleinrichtung, mittels welcher in dem dargestellten Umgebungsbild zumindest mehrere Bildelemente auswählbar sind, eine Steuereinrichtung, mittels welcher aus den ausgewählten Bildelementen eine Steuerbefehlssequenz für die Kamera erzeugbar ist, und eine Datenübertragungsstrecke vorgesehen sind, über welche die Steuerbefehlssequenz an die Kamera zur Ausführung der Kamerafahrt übermittelbar ist.

Erfindungsgemäß ist es nicht erforderlich, die Auswirkungen von Veränderungen von Kameraeinstellungen "live" zu verfolgen und zu kontrollieren, sondern es wird mit einem Bild der Kameraumgebung gearbeitet, wobei die Darstellung dieses Umgebungsbildes grundsätzlich an jedem beliebigen Ort erfolgen kann. Zur Festlegung der Kamerafahrt werden in dem dargestellten Umgebungsbild Bildelemente ausgewählt, bei denen es sich insbesondere um solche Bereiche der Kameraumgebung handelt, die während der festzulegenden Kamerafahrt ins Blickfeld der Kamera gelangen sollen. Ein Bildelement kann ein bestimmtes Objekt in der Kameraumgebung sein, z.B. ein Landschaftsmerkmal oder ein Gebäude, oder ein größerer Bereich, der ein bestimmtes Objekt enthält, wobei z.B. der Bediener durch Auswählen des Bereiches die Lage des Objektes in dem während der Kamerafahrt von der Kamera gesehenen und mit dem ausgewählten Bereich übereinstimmenden Bildausschnitt festlegt.

Die Darstellung des Umgebungsbildes kann grundsätzlich in beliebiger Größe erfolgen, wobei es genügt, wenn das Umgebungsbild lediglich ausschnittsweise dargestellt und beim Auswählen der Bildelemente durchgescrollt wird. Insbesondere kann eine Zoomfunktion vorgesehen sein, mit der interessierende Bereiche des dargestellten Umgebungsbildes herangezoomt werden, um die Auswahl eines Bildelementes in der auf diese Weise vergrößerten Darstellung zu treffen.

Bei den mittels Steuerbefehlen veränderbaren Kameraeinstellungen handelt es sich insbesondere um die Ausrichtung der Kamera und deren Zoom- oder Brennweiteneinstellung. Mittels der Steuerbefehle kann die Kamera beispielsweise dazu veranlasst werden, Schwenkbewegungen um ein jeweils vorgegebenes Maß und mit einer vorgegebenen Geschwindigkeit auszuführen oder - ebenfalls mit einer vorgegebenen Geschwindigkeit - von einer Weitwinkel- auf eine Teleaufnahme zu wechseln.

Um die ausgewählten Bildelemente in die entsprechenden Steuerbefehle umzusetzen, kann von den bekannten Eigenschaften bzw. dem bekannten Verhalten der Kamera bei Änderung von Kameraeinstellungen Gebrauch gemacht werden, so dass z.B. berechnet werden kann, wie ein zum Verschwenken der Kamera vorgesehener Elektromotor angesteuert werden muss, damit die Kamera ausgehend von einem ersten interessierenden Bildelement um eine vertikale und eine horizontale Achse so weit verschwenkt wird, dass ein zweites interessierendes Bildelement bei einer bestimmten Zoom-Einstellung sich z.B. im oberen rechten Eckbereich des von der Kamera gesehenen Bildausschnitts befindet.

Dabei kann zur Erzeugung der Steuerbefehlssequenz von einer bekannten Zuordnung zwischen Kameraeinstellung und von der Kamera gesehenem Bildausschnitt Gebrauch gemacht werden. So lässt sich z.B. aus der Größe und der Richtung des für jede Kameraeinstellung von der Kamera eingesehenen Raumwinkelbereiches bestimmen, welchen Ausschnitt der tatsächlichen Kameraumgebung die Kamera bei der jeweiligen Kameraeinstellung "sieht".

Erfindungsgemäß brauchen weder die Aufnahme des Umgebungsbildes und die Auswahl der Bildelemente, noch die Erzeugung der Steuerbefehlssequenz und die Ansteuerung der Kamera gemäß der Steuerbefehlssequenz gleichzeitig zu erfolgen. Vielmehr kann das Umgebungsbild aufgenommen und zu einem beliebig späteren Zeitpunkt zur Auswahl der Bildelemente und damit zur Festlegung der Kamerafahrt dargestellt werden. Entsprechend kann aus ausgewählten Bildelementen eine Steuerbefehlssequenz erzeugt und zunächst abgespeichert werden, bevor zu einem beliebigen späteren Zeitpunkt diese Steuerbefehlssequenz zur Ansteuerung der Kamera verwendet wird.

Folglich kann erfindungsgemäß die Festlegung von Kamerafahrten sowohl in zeitlicher als auch in räumlicher Hinsicht vollkommen unabhängig von der eigentlichen Kamera und deren Standort erfolgen, wobei dennoch eine exakte Kameraführung gewährleistet ist, da die Auswahl der Bildelemente und damit die Festlegung der Kamerafahrt in der bildlichen Darstellung der Kameraumgebung und damit anhand der tatsächlichen Umgebung der Kamera erfolgt und so sichergestellt ist, dass die ausgewählten Bildelemente in solche Steuerbefehle umgesetzt werden, die während der gemäß eben dieser Steuerbefehle durchgeführten Kamerafahrt zu den gewünschten Bildausschnitten führen.

Besonders vorteilhaft ist die Erfindung in Verbindung mit Kameras, in deren Umgebung genügend Bereiche existieren, die keinen zeitlichen Veränderungen unterworfen sind, da es dann nicht oder nur in vergleichsweise großen Zeitabständen erforderlich ist, das darzustellende Umgebungsbild zu aktualisieren. Besonders vorteilhaft ist die Erfindung daher in Verbindung mit im Freien installierten Kameras, mit denen Landschaftsaufnahmen oder Aufnahmen von Städten oder ausgewählten Bauwerken bereitgestellt werden sollen.

Das Umgebungsbild kann mittels der Kamera selbst aufgenommen werden. Die Umsetzung der ausgewählten Bildelemente in die Steuerbefehlssequenz wird hierdurch vereinfacht, da Unterschiede in den Eigenschaften der das Umgebungsbild aufnehmenden Kamera einerseits und der eigentlichen, zur Ausführung der Kamerafahrt anzusteuernden Kamera andererseits nicht berücksichtigt zu werden brauchen.

Es kann wenigstens eine Zusatzkamera vorgesehen sein, die bevorzugt als Panoramakamera ausgebildet ist und einen Sichtbereich mit einem horizontalen Blickwinkel von beispielsweise 180° abdeckt. Die Bewegung der Zusatzkamera kann fest an die Bewegung der eigentlichen Kamera gekoppelt sein, so dass der Sichtbereich der Zusatzkamera von der Stellung der eigentlichen Kamera abhängt. Alternativ oder zusätzlich zu einem mittels der eigentlichen Kamera aufgenommenen Umgebungsbild kann auch mit der Zusatzkamera ein Umgebungsbild bereitgestellt werden, in dem ebenfalls eine Kamerafahrt für die eigentliche Kamera festgelegt werden kann.

Bei der Erzeugung der Steuerbefehlssequenz für die eigentliche Kamera muss dann zwar insbesondere im Hinblick auf die unterschiedlichen Blickwinkel der beiden Kameras berücksichtigt werden, dass das zur Festlegung der Kamerafahrt dienende Umgebungsbild mit der Zusatzkamera und nicht mit der eigentlichen Kamera selbst aufgenommen wurde. Die Zusatzkamera kann aber von Vorteil sein, wenn ein möglichst aktuelles Bild der Umgebung als Grundlage für die Kamerafahrtfestlegung dienen soll, um z.B. in bestimmten Bereichen herrschende, beispielsweise wetterbedingte schlechte Sichtbedingungen berücksichtigen zu können. Besonders vorteilhaft ist dies dann, wenn die Umgebungsbildbereitstellung mittels der eigentlichen Kamera vergleichsweise aufwendig und zeitintensiv ist. Die Verwendung einer nach Art eines "Türspions" einen großen Sichtbereich abdeckenden Zusatzkamera hat insbesondere den Vorteil, dass keine Zusammensetzung des Umgebungsbildes aus Einzelbildern erforderlich ist, sondern die Festlegung der Kamerafahrt in einem einzigen ausreichend großen Bild der Zusatzkamera erfolgen kann.

Ferner kann vorgesehen sein, dass das Umgebungsbild aus mehreren mittels der Kamera selbst aufgenommenen Einzelbildern zusammengesetzt wird. Das Umgebungsbild kann eine Panoramaansicht sein, die vorzugsweise einen horizontalen Winkelbereich von 360° abdeckt.

Ferner kann vorgesehen sein, dass zur Ansteuerung der Kamera aus einem eine Mehrzahl von unterschiedlichen, zuvor erzeugten Steuerbefehlssequenzen umfassenden Kamerafahrtenarchiv eine Kamerafahrt ausgewählt wird.

So ist es beispielsweise möglich, anhand des dargestellten Umgebungsbildes eine Vielzahl unterschiedlicher Kamerafahrten festzulegen und die entsprechenden Steuerbefehlssequenzen abzuspeichern, die dann zu einem späteren Zeitpunkt je nach Bedarf abgerufen werden können, um die Kamera entsprechend anzusteuern.

Unterschiedliche Kameraeinstellungen können durch Bewegen der Kamera, insbesondere Verschwenken um eine vertikale und/oder horizontale Achse, durch Verändern der Kamerabrennweite, durch Verändern der Kamerablende und/oder durch Verändern des Kamerafokus erzielt werden.

Ferner kann vorgesehen sein, dass zusätzlich zu den Bildelementen im Umgebungsbild bestimmte Eigenschaften der Bildelemente und/oder Eigenschaften der zwischen den Bildelementen auszuführenden Kameraschwenks festgelegt werden. Bei diesen Eigenschaften handelt es sich z.B. um ein Geschwindigkeits- und/oder Beschleunigungsprofil von Änderungen wenigstens einer Kameraeinstellung, insbesondere der Kameraausrichtung, der Kamerabrennweite, der Kamerablende und/oder des Kamerafokus.

Hierbei können mit den im Umgebungsbild ausgewählten Bildelementen nicht nur bestimmte "Stützpunkte" der Kamerafahrt festgelegt, sondern es kann außerdem gezielt vorgegeben werden, mit welcher Geschwindigkeit und/oder mit welcher Beschleunigung die einzelnen Bildelemente nacheinander angefahren werden. Ferner können beispielsweise automatisch bestimmte Bildausschnitte während der Kamerafahrt gezielt überbelichtet oder unterbelichtet werden. Ferner können z.B. automatisch gezielte Unschärfeeffekte in die Kamerafahrt integriert werden.

Des Weiteren kann zusätzlich vorgesehen sein, dass das Auslösen wenigstens einer Kamerafunktionen festgelegt wird. Eine auslösbare Kamerafunktion ist beispielsweise ein Weißabgleich, der z.B. automatisch zu Beginn der Kamerafahrt durchgeführt wird.

Bei der erfindungsgemäßen Aufnahmevorrichtung können die Anzeigeeinrichtung und die Steuereinrichtung Bestandteil einer Zentralstation sein, der eine Mehrzahl von Aufnahmeplätzen mit jeweils wenigstens einer Kamera zugeordnet ist.

So kann beispielsweise von einer einzigen Zentralstation aus eine Vielzahl von über die ganze Welt verteilten, jeweils fest an einem Aufnahmeplatz installierten Kameras angesteuert werden, indem jeweils anhand eines an der Zentralstation dargestellten Bildes der jeweiligen Kameraumgebung ein oder mehrere Kamerafahrten definiert werden, die dann zu einem jeweils gewünschten Zeitpunkt durch Übermittlung der entsprechenden Steuerbefehlssequenzen ausgeführt werden, um auf diese Weise Bilddaten von der ganzen Welt z.B. in Form kurzer Videoclips zu erhalten, die nach Übermittlung zurück an die Zentralstation beispielsweise zu einem Programm zusammengestellt und Fernsehsendern angeboten werden können.

Ein besonderer Vorteil der Erfindung ist, dass sie eine automatische Zusammenstellung eines Live- oder zumindest Quasi-Live-Programms ermöglicht, bei dem von Videodaten einer Mehrzahl von Kameras Gebrauch gemacht wird, die jeweils Videodaten gemäß zuvor festgelegten Kameräfahrten bereitstellen können. Hierzu kann zunächst ein Aufnahmeplan erstellt werden, mit dem festgelegt wird, über welche Kamera wann und mit welcher Kamerafahrt gesendet wird, wobei insbesondere sichergestellt werden kann, dass von einer Kamera auf eine andere Kamera zu genau definierbaren Zeitpunkten umgeschaltet wird, z.B. jeweils am Ende der zuvor für die Kamera festgelegten Kamerafahrt, wodurch als störend empfundene Schnitte vermieden werden können.

Durch diese erfindungsgemäße Möglichkeit zur automatischen Koordination eines grundsätzlich beliebig viele und zu prinzipiell beliebigen Kamerafahrten ansteuerbare Kameras umfassenden, weltweiten Kameranetzwerkes können in technischer und ästhetischer Hinsicht professionelle Programme von hoher Qualität bei gleichzeitig vollautomatischem Betrieb produziert werden.

Als Steuereinrichtung kann ein handelsüblicher PC verwendet werden, wobei als Anzeigeeinrichtung der PC-Monitor und als Auswahleinrichtung ein entsprechendes Peripheriegerät wie beispielsweise eine Tastatur und/oder eine Maus dient.

Die Datenübertragungsstrecke zur Übermittlung der Steuerbefehlssequenz an die Kamera kann grundsätzlich jede beliebige Telekommunikationsverbindung sein. Insbesondere kann von einem bestehenden Mobilfunknetz und/oder Telefonfestnetz Gebrauch gemacht werden. Die gleiche Telekommunikationsverbindung kann zur Rückübermittlung der mittels der Kamera aufgenommenen Videodaten verwendet werden, wobei eine Zwischenspeicherung oder -pufferung der Bilddaten am Aufnahmeplatz, also am Ort der Kamera, erfolgen kann, um kostengünstige Übertragungszeiten abzuwarten.

Die Kamera kann wenigstens eine Nachweiseinrichtung umfassen, mit der ein als Bezugspunkt für eine veränderbare Kameraeinstellung dienender Referenzwert detektierbar ist. Eine derartige Nachweiseinrichtung umfasst z.B. einen Sensor, mit dem das Erreichen einer 0°-Ausrichtung der Kamera nachweisbar ist, bezüglich welcher ein jeweils erforderliches Maß einer Verschwenkung der Kamera um eine vertikale Achse berechnet und ein zum Verschwenken der Kamera vorgesehener Elektromotor angesteuert wird.

Weitere Ausführungsformen der Erfindung sind auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen.
- Fig. 1: schematisch eine Aufnahmevorrichtung gemäß einer Ausführungsform der Erfindung, die zur Durchführung eines erfindungsgemäßen Aufnahmeverfahrens ausgebildet ist, und
- Fig. 2: schematisch einen Teil eines dargestellten Umgebungsbildes mit verschiedenen, von der Kamera gesehenen Bildausschnitten zur Erläuterung der Erfindung.

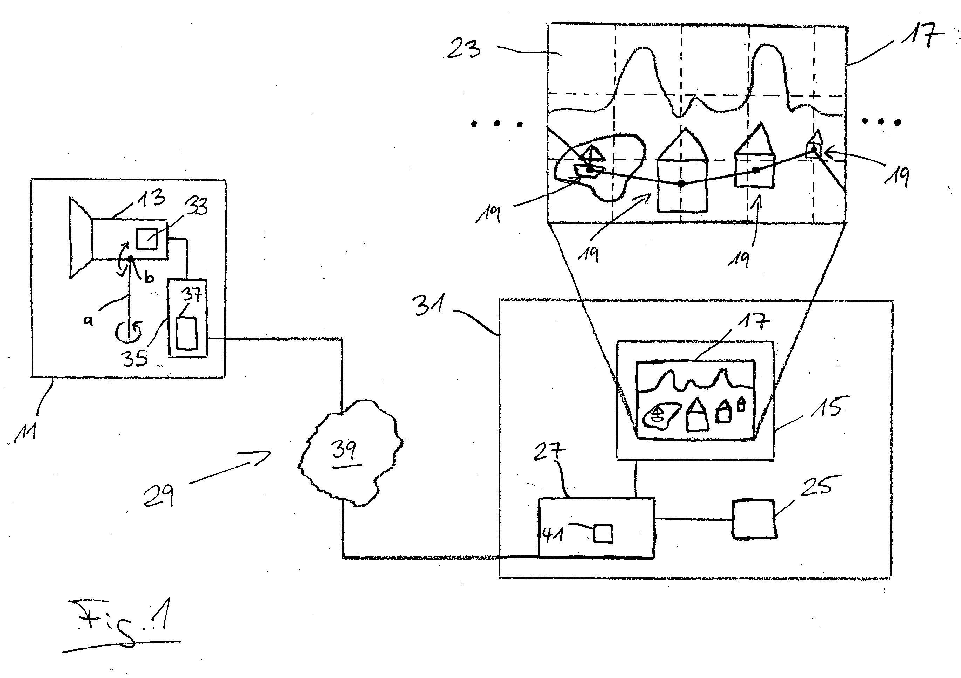

Gemäß Fig. 1 umfasst die Aufnahmevorrichtung der Erfindung eine an einem Aufnahmeplatz 11 fest installierte Kamera 13. Die Kamera 13 ist um eine vertikal verlaufende Achse a und eine horizontal verlaufende Achse b verschwenkbar. Hierzu ist die Kamera 13 mit elektrischen Schrittmotoren versehen, welche die Kamera 13 mit einer sehr hohen Positionsgenauigkeit um einen jeweils gewünschten Winkelbereich verschwenken, und zwar jeweils in Bezug auf einen vorgegebenen Null- oder Referenzwinkel, dessen Erreichen jeweils durch eine Nachweiseinrichtung 33 in Form eines geeigneten Sensors detektierbar ist.

Weitere veränderbare Kameraeinstellungen sind der Fokus der Kamera 13, deren Brennweite sowie deren Blende.

Die Ansteuerung der Kamera 13 und insbesondere der Schrittmotoren erfolgt durch eine lokale, am Ort der Kamera befindliche Steuereinrichtung 35, die in die Kamera 13 integriert sein kann. Die Steuereinrichtung 35 umfasst außerdem eine Speichereinrichtung 37, in welcher mittels der Kamera 13 aufgenommene Videodaten gespeichert werden können.

Über eine Datenübertragungsstrecke 29, die ein Mobilfunknetz und/oder Telefonfestnetz 39 umfasst, kann die lokale Steuereinrichtung 35 der Kamera 13 mit einer zentralen Steuereinrichtung 27 einer Zentralstation 31 kommunizieren, die von dem Aufnahmeplatz 11 räumlich entfernt gelegen ist und sich grundsätzlich an einem beliebigen Ort und in beliebig großer Entfernung von dem Aufnahmeplatz 11 befinden kann.

Die zentrale Steuereinrichtung 27, beispielsweise ein handelsüblicher PC, weist eine Anzeigeeinrichtung 15, z.B. in Form eines handelsüblichen Monitors, sowie eine Auswahleinrichtung 25, insbesondere in Form einer Tastatur und/oder einer Maus auf.

In einer Speichereinheit 41 des Rechners 27 ist ein Bild der Umgebung der am Aufnahmeplatz 11 installierten Kamera 13 abgespeichert. Dieses in Fig. 1 nur teilweise gezeigte Umgebungsbild 17 kann auf dem Monitor 15 dargestellt werden, um anhand dieses Umgebungsbildes 17 ein oder mehrere Kamerafahrten für die am Aufnahmeplatz 11 installierte Kamera 13 festzulegen. Je nach am Monitor 15 eingestellter und bevorzugt veränderbarer Ansichtsgröße wird das Umgebungsbild 17 ganz oder teilweise dargestellt, d.h. die im Folgenden beschriebene Auswahl von Bildelementen zur Festlegung von Kamerafahrten kann anhand des gesamten Umgebungsbildes 17 oder einzelner Ausschnitte davon erfolgen.

Wie in der vergrößerten Darstellung der Fig. 1 angedeutet, ist in diesem hier lediglich zur prinzipiellen Erläuterung verwendeten Beispiel die Umgebung der Kamera 13 eine Landschaft mit einer Gebirgskette im Hintergrund, einem See mit einem Segelboot sowie drei in unterschiedlichen Abständen zum Standort der Kamera 13 gelegenen Gebäuden. Das Umgebungsbild 17 ist eine abgewickelte 360°-Panoramaansicht, d.h. die Kamera 13 ist über einen Winkelbereich von 360° um die vertikale Achse a verschwenkbar und kann somit eine vollständige Rundum-Ansicht ihrer Umgebung liefern.

Das in der Speichereinheit 41 der zentralen Steuereinrichtung 27 abgelegte und auf dem Monitor 15 darstellbare Umgebungsbild 17 wurde zuvor mittels der Kamera 13 selbst aufgenommen, und zwar in Form von mehreren Einzelbildern 23, die zu dem Umgebungsbild 17 zusammengesetzt werden. Mit gestrichelten Linien ist das von den Einzelbildern gebildete Gitternetz angedeutet.

Zur Festlegung einer Kamerafahrt wählt der sich am Ort der Zentralstation 31 befindende Bediener mit Hilfe von Maus bzw. Tastatur 25 des Rechners 27 nacheinander mehrere Bildelemente 19 aus, die bei der späteren Ausführung der Kamerafahrt automatisch nacheinander von der Kamera 13 angefahren werden sollen. In dem dargestellten Beispiel soll also zunächst das Segelboot auf dem See, anschließend das im Vordergrund gelegene Gebäude, dann das sich in der mittleren Entfernung befindende Gebäude und daraufhin das in der größten Entfernung zum Kamerastandort befindliche Gebäude anvisiert werden. Ferner kann der Bediener festlegen, ob - und falls ja wie lange - die Kamera 13 auf einem ausgewählten Bildelement 19 verweilen und wie lange ein Schwenk von einem Bildelement 19 zum nächsten Bildelement 19 dauern soll. Dabei kann grundsätzlich nicht nur die Dauer, sondern im Prinzip auch der Verlauf des Schwenks beliebig gewählt werden, wobei in dem in Fig. 1 dargestellten Beispiel die einzelnen Kameraschwenks geradlinig von Bildelement 19 zu Bildelement 19 verlaufen, grundsätzlich aber beliebige Bahnkurven möglich sind.

Die Auswahl eines Bildelementes kann durch Auswählen eines Bildpunktes, z.B. einfach durch "Anklicken", oder eines Bildbereiches erfolgen, z.B. durch "Rahmenziehen". Dabei kann festgelegt sein, dass bei Auswahl eines Bildpunktes dieser automatisch den Mittelpunkt des von der Kamera 13 gesehenen Bildausschnitts darstellt und zusätzlich dessen Größe festgelegt werden muss, damit die entsprechende Brennweiteneinstellung bestimmt werden kann. Wird ein Bildbereich ausgewählt, kann festgelegt sein, dass dieser Bildbereich gleichzeitig dem von der Kamera 13 gesehenen Bildausschnitt darstellt.

Des Weiteren kann der Bediener sowohl für die ausgewählten Bildelemente 19 als auch für die einzelnen Kameraschwenks unterschiedliche Eigenschaften festlegen, die mit der jeweils verwendeten Kamera 13 möglich sind. So kann beispielsweise für jedes Bildelement 19 individuell die Kamerabrennweite, die Kamerablende und/oder der Kamerafokus definiert werden, um bestimmte Effekte zu erzielen.

Auch können die Geschwindigkeiten und/oder die Beschleunigungen der entsprechenden Kamerabewegungen vorgegeben werden. Allgemein können für alle Änderungen, die an den Einstellungen der Kamera vorgenommen werden können, gezielt Geschwindigkeits- und/oder Beschleunigungsprofile zur Festlegung der Kamerafahrt vorgegeben werden.

Bei den veränderbaren Kameraeinstellungen muss es sich nicht lediglich um die Kameraausrichtung handeln, sondern es können auch die Kamerabrennweite, die Kamerablende und/oder oder der Kamerafokus jeweils gemäß einem vorgegebenen Geschwindigkeits- bzw. Beschleunigungsprofil während der Kamerafahrt verändert werden.

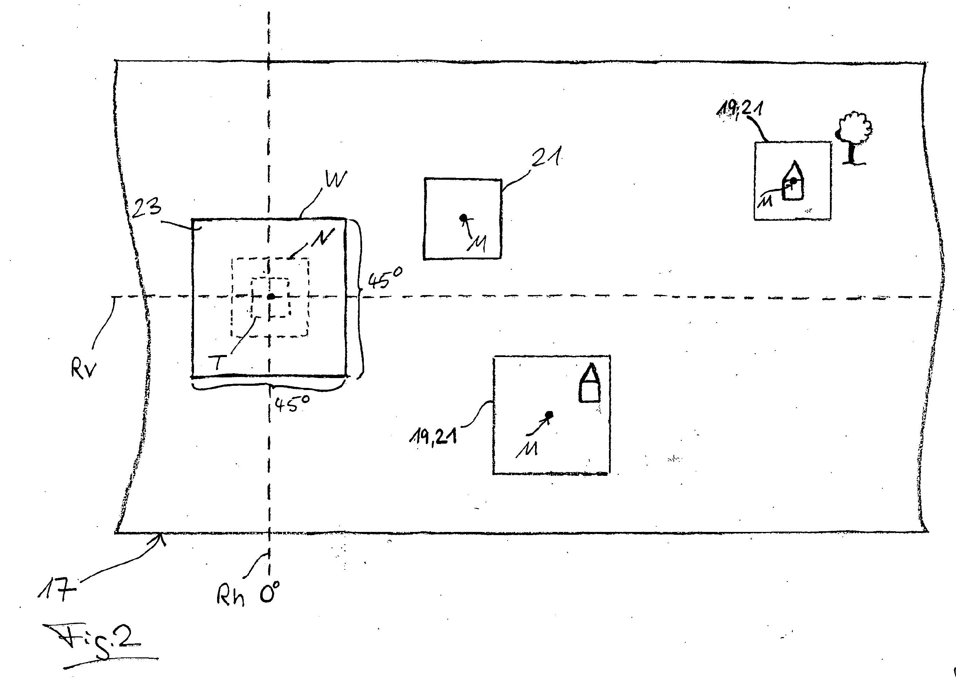

Anhand von Fig. 2 wird im Folgenden beispielhaft erläutert, wie in Kenntnis der bekannten Eigenschaften der Kamera 13 aus den ausgewählten Bildelementen 19 Steuerbefehle erzeugt werden können, die - wenn die Kamera 13 entsprechend angesteuert wird - dafür sorgen, dass bei der Ausführung der Kamerafahrt die ausgewählten Bildelemente 19 angefahren werden und dabei die gewünschte Lage und Größe im jeweils von der Kamera 13 gesehenen Bildausschnitt aufweisen.

In Fig. 2 ist ein Teil eines Umgebungsbildes 17 dargestellt, das dem maximalen Sichtbereich der Kamera 13 entspricht. Bei der maximalen Weitwinkel-Einstellung W besitzt die Kamera 13 sowohl in vertikaler als auch in horizontaler Richtung einen Blickwinkel von 45°, ist in horizontaler Richtung - also um die vertikale Achse a - um 360° und in vertikaler Richtung - also um die horizontale Achse b - um 90° verschwenkbar. Referenzwinkel Rh der Horizontalbewegung und Rv der Vertikalbewegung sind jeweils durch Sensoren der Kamera 13 detektierbar und dienen als Bezugswerte für die Berechnung der zur Ansteuerung der Kameraschrittmotoren verwendeten Steuerbefehle. Der Referenzwinkel Rv entspricht dabei einer Horizontalausrichtung der Kamera 13, gegenüber welcher die Kamera 13 um 45° nach oben und um 45° nach unten verschwenkbar ist.

In diesem Beispiel kann das Umgebungsbild 17 folglich durch 3 x 8 = 24 Einzelbilder 23 zusammengesetzt werden, die jeweils bei maximaler Weitwinkel-Einstellung W mittels der Kamera 13 aufgenommen werden.

Außerdem ist nicht nur für die maximale Weitwinkel-Einstellung W, sondern für jede einstellbare Brennweite der Kamera 13 der entsprechende Blickwinkel bekannt, der beispielsweise bei maximaler Tele-Einstellung T etwa 10° und bei einer mittleren Normaleinstellung N etwa 20° beträgt.

Wenn - wie am Beispiel des in Fig. 2 linken Bildelements - das vom Bediener im Umgebungsbild 17 ausgewählte Bildelement - hier ein durch "Anklicken" ausgewählter Bildpunkt - mit dem Mittelpunkt des von der Kamera 13 gesehenen Bildausschnitts 21 zusammenfallen soll, dann braucht die Kamera 13 lediglich jeweils um einen entsprechenden Winkel in horizontaler Richtung und in vertikaler Richtung verschwenkt zu werden, da die Lage der Referenzwerte Rh und Rv in dem Umgebungsbild 17 sowie für jede Ausrichtung der Kamera 13 der Winkelabstand des Mittelpunkts des von der Kamera 13 gesehenen Bildausschnitts zu dem Referenzwert Rh und zu dem Referenzwert Rv bekannt sind. Zur Festlegung des Bildausschnitts 21 muss zusätzlich zu dem Mittelpunkt M die Größe des Bildausschnitts 21 festgelegt werden, damit die entsprechende Brennweiteneinstellung bestimmt werden kann.

Am Beispiel des in Fig. 2 rechten Bildelements 19 - hier ein größerer Bildbereich - ist gezeigt, dass der Bediener außerdem festlegen kann, dass ein Landschaftsmerkmal - in diesem Beispiel ein Baum - nicht im Bildausschnitt 21 zu sehen sein soll, wenn während der späteren Kamerafahrt der Mittelpunkt M des von der Kamera 13 gesehenen Bildausschnitts 21 mit dem hier von einem Gebäude gebildeten Mittelpunkt M des ausgewählten Bildbereiches 19 zusammenfällt. Hierzu kann der Bediener im Umgebungsbild 17 einen Rahmen um das Gebäude ziehen, dessen Größe so gewählt ist, dass der Baum außerhalb dieses Rahmens liegt.

Mittels einer entsprechenden Software werden dann aus dem ausgewählten, durch den Rahmen festgelegten Bildbereich 19 Steuerbefehle für die Kameraausrichtung und die Brennweiteneinstellung berechnet, die dafür sorgen, dass während der späteren Kamerafahrt der von der Kamera gesehene Bildausschnitt mit dem Bildbereich 19 übereinstimmt. Mit dem Rahmen ist also gleichzeitig auch die entsprechende Brennweiteneinstellung der Kamera 13 festgelegt.

Bei dem in Fig. 2 mittleren Beispiel soll ein interessierendes Umgebungsmerkmal - hier wiederum ein Gebäude - in der rechten oberen Ecke des später während der Kamerafahrt von der Kamera 13 gesehenen Bildausschnitts 21 liegen, so dass der Bediener zur Festlegung eines Bildelementes 19 in dem Umgebungsbild 17 einen Rahmen um einen Mittelpunkt M zieht, wobei der Rahmen zwar mit dem Gebäude nicht zusammenfällt, aber das Gebäude noch einschließt. Aus diesen Vorgaben werden wiederum die Steuerbefehle berechnet, die für die erforderlichen Kamerabewegungen und die erforderliche Einstellung der Kamerabrennweite sorgen. Dabei bestimmt die Lage des Rahmens 19 im Umgebungsbild 17 die Kameraausrichtung, während die Größe des Rahmens 19 die Kamerabrennweite bestimmt.

Alle auf diese Weise aus den ausgewählten Bildelementen 19 erzeugten Steuerbefehle werden zu einer Steuerbefehlssequenz zusammengefasst und in der Speichereinheit 41 der zentralen Steuereinrichtung 27 abgelegt. Zur Ausführung der entsprechenden Kamerafahrten wird dann die jeweilige Steuerbefehlssequenz über die Datenübertragungsstrecke 29 an die lokale Steuereinrichtung 35 übermittelt, welche die Kamera 13 zu einem ebenfalls vorgebbaren Zeitpunkt entsprechend ansteuert, woraufhin die Videodaten mit der gewünschten Kamerafahrt aufgenommen werden.

Die Steuerbefehlssequenzen können auch in der Speichereinrichtung 37 der lokalen Steuereinrichtung 35 gespeichert werden. Es braucht dann von der Zentralstation 31 lediglich ein Befehl an die lokale Steuereinrichtung 35 übermittelt zu werden, der neben einer Kennung der auszuführenden Kamerafahrt beispielsweise einen gewünschten Zeitpunkt enthält, zu dem die Kamerafahrt gestartet werden soll.

Diejenige Steuerbefehlssequenz, die ausgeführt wird, um die zum Zusammensetzen der an der Zentralstation 31 als Umgebungsbild 17 darzustellenden Einzelbilder 23 aufzunehmen, kann selbst anhand eines zuvor aufgenommenen Umgebungsbildes 17 an der Zentralstation 31 erzeugt werden.

In Fig. 1 nicht dargestellt sind weitere Aufnahmeplätze, an denen ebenfalls jeweils eine zumindest eine Kamera fest installiert ist und mit denen die Zentralstation 31 ebenfalls kommunizieren kann, um auch für diese Kameras jeweils anhand eines entsprechenden Umgebungsbildes Kamerafahrten festlegen zu können.

Die Kameras 13 können Bestandteil eines gemeinsamen Netzwerkes zur vollautomatischen Produktion von Live-Programmen sein, die aus den Videodaten der einzelnen Kameras 13 gemäß einem zuvor aufgestellten Aufnahmeplan zusammengestellt werden, mit dem z.B. die von den einzelnen Kameras 13 zu absolvierenden Kamerafahrten und die Reihenfolge vorgegeben werden kann, in der die Videodaten der einzelnen Kameras 13 das Programm bilden sollen.

Die Kamerafahrten können auch in zeitlicher Hinsicht grundsätzlich beliebig festgelegt werden. So kann z.B. eine Zeitraffer-Funktion realisiert werden, bei der eine bestimmte Bahnkurve von der Kamera nicht in einer einem "normalen" Schwenk entsprechenden "Echtzeit" durchlaufen, sondern in vorgebbaren Zeitabständen von beispielsweise einigen Sekunden jeweils ein einziges Bild aufgenommen und zwischen der Aufnahme zweier Bilder die Kamera um ein vorgegebenes Maß auf der Bahnkurve weiter bewegt wird. Dabei kann die Bahnkurve im Rahmen der technischen Möglichkeiten der jeweiligen Kamera grundsätzlich beliebig fein abgefahren werden, wobei auch extrem kleine Schwenkbewegungen von z.B. 1/10.000° zwischen zwei Einzelbildern möglich sind. Das Durchlaufen der gesamten Bahnkurve, also die Kamerafahrt, kann mehrere Stunden, z.B. 12 oder 24 Stunden, dauern. Die Einzelbilder können noch in der Kamera zusammengesetzt und dann als ein beispielsweise einen halben oder ganzen Tag am Ort der Kamera zeigender Film an eine Zentralstation übermittelt werden.

Im Rahmen einer Kamerafahrt oder durch einen speziellen Steuerbefehl kann vorgesehen sein, dass die Kamera automatisch oder fernsteuerbar eine vor Ort installierte Justagefläche anvisiert, mittels welcher bestimmte Funktionen der Kamera überprüft oder die Kamera an die momentanen Bedingungen vor Ort angepasst werden kann. Auf diese Weise kann z.B. ein Weißabgleich der Kamera durchgeführt werden. Die hierfür vorgesehene, speziell zu diesem Zweck ausgebildete Justagefläche kann z.B. am Kamerafuß oder einer anderen Stelle angeordnet sein, wo sie außerhalb des für die "normalen" Kamerafahrten benötigten Sichtbereichs der Kamera liegt.

Ferner kann vorgesehen sein, dass die Kamera nach dem Durchlaufen einer Bahnkurve, also am Ende einer Kamerafahrt, automatisch in eine Schutzstellung fährt, in der sie und insbesondere die Empfangsoptik bestmöglich vor der Witterung sowie vor anderen äußeren Einflüssen geschützt ist. Die hierfür erforderlichen Steuerbefehle sind bevorzugt jeweils bereits in die durch die Festlegung der Kamerafahrt erzeugten Steuerbefehlssequenzen integriert, was vorzugsweise automatisch erfolgt.

### Bezugszeichenliste

- 11: Aufnahmeplatz
- 13: Kamera
- 15: Anzeigeeinrichtung
- 17: Umgebungsbild
- 19: Bildelement
- 21: Bildausschnitt
- 23: Einzelbild
- 25: Auswahleinrichtung
- 27: zentrale Steuereinrichtung
- 29: Datenübertragungsstrecke
- 31: Zentralstation
- 33: Nachweiseinrichtung
- 35: lokale Steuereinrichtung
- 37: Speichereinrichtung
- 39: Mobilfunknetz, Telefonfestnetz
- 41: Speichereinheit

- a: vertikale Schwenkachse
- b: horizontale Schwenkachse

## Patentansprüche

1. Verfahren zur Aufnahme von Videodaten mittels wenigstens einer an einem Aufnahmeplatz (11) fest installierten, zu unterschiedlichen Einstellungen ansteuerbaren Kamera (13), bei dem
- an einer vom Aufnahmeplatz (11) räumlich entfernt gelegenen Anzeigeeinrichtung (15) ein Bild (17) der Umgebung der Kamera (13) dargestellt wird,
- durch Auswählen zumindest mehrerer Bildelemente (19) in dem dargestellten Umgebungsbild (17) wenigstens eine Kamerafahrt festgelegt wird,
- aus den ausgewählten Bildelementen (19) eine Steuerbefehlssequenz für die Kamera (13) erzeugt wird, und
- die Kamera (13) gemäß der Steuerbefehlssequenz zur Ausführung der Kamerafahrt angesteuert wird.

2. Verfahren nach Anspruch 1,
**dadurch gekennzeichnet,**
**dass** das Umgebungsbild (17) mittels der Kamera (13) selbst aufgenommen wird.

3. Verfahren nach Anspruch 1 oder 2,
**dadurch gekennzeichnet,**
**dass** zur Aufnahme des Umgebungsbildes (17) eine Kamerafahrt ausgeführt wird, die anhand eines früher aufgenommenen Umgebungsbildes festgelegt wurde.

4. Verfahren nach einem der vorhergehenden Ansprüche,
**dadurch gekennzeichnet,**
**dass** das Umgebungsbild (17) aus mehreren mittels der Kamera (13) selbst aufgenommenen Einzelbildern (23) zusammengesetzt wird.

5. Verfahren nach einem der vorhergehenden Ansprüche,
**dadurch gekennzeichnet,**
**dass** das Umgebungsbild (17) eine Panoramaansicht ist, die vorzugsweise einen horizontalen Winkelbereich von bis zu 360° abdeckt.

6. Verfahren nach einem der vorhergehenden Ansprüche,
**dadurch gekennzeichnet,**
**dass** die Erzeugung der Steuerbefehlssequenz aus den ausgewählten Bildelementen (19) unter Verwendung einer bekannten Zuordnung zwischen Kameraeinstellung und von der Kamera (13) gesehenem Bildausschnitt (21) erfolgt.

7. Verfahren nach einem der vorhergehenden Ansprüche,
**dadurch gekennzeichnet,**
**dass** die Auswahl der Bildelemente (19) zu einem späteren Zeitpunkt erfolgt als die Aufnahme des Umgebungsbildes (17), in dem die Bildelemente (19) ausgewählt werden.

8. Verfahren nach einem der vorhergehenden Ansprüche,
**dadurch gekennzeichnet,**
**dass** die Ansteuerung der Kamera (13) gemäß der Steuerbefehlssequenz zu einem späteren Zeitpunkt erfolgt als die Erzeugung der Steuerbefehlssequenz aus den ausgewählten Bildelementen (19).

9. Verfahren nach einem der vorhergehenden Ansprüche,
**dadurch gekennzeichnet,**
**dass** zur Ansteuerung der Kamera (13) aus einem eine Mehrzahl von unterschiedlichen, zuvor erzeugten Steuerbefehlssequenzen umfassenden Kamerafahrtenarchiv eine Kamerafahrt ausgewählt wird.

10. Verfahren nach einem der vorhergehenden Ansprüche,
**dadurch gekennzeichnet,**
**dass** unterschiedliche Kameraeinstellungen durch Bewegen der Kamera (13), insbesondere Verschwenken um eine vertikale und/oder horizontale Achse, durch Verändern der Kamerabrennweite, durch Verändern der Kamerablende und/oder durch Verändern des Kamerafokus erzielt werden.

11. Verfahren nach einem der vorhergehenden Ansprüche,
**dadurch gekennzeichnet,**
**dass** zusätzlich Eigenschaften der Bildelemente (19) und/oder der zwischen den Bildelementen (19) auszuführenden Kameraschwenks festgelegt werden, und/oder dass das Auslösen wenigstens einer Kamerafunktion, insbesondere eines Weißabgleichs, festgelegt wird.

12. Verfahren nach Anspruch 11,
**dadurch gekennzeichnet,**
**dass** die Eigenschaften ein Geschwindigkeits- und/oder Beschleunigungsprofil von Änderungen wenigstens einer Kameraeinstellung, insbesondere der Kameraausrichtung, der Kamerabrennweite, der Kamerablende und/oder des Kamerafokus, umfassen.

13. Verfahren nach einem der vorhergehenden Ansprüche,
**dadurch gekennzeichnet,**
**dass** im Rahmen eines Aufnahmeplans eine Mehrzahl von Kameras (13) jeweils gemäß einer zuvor festgelegten, durch den Aufnahmeplan vorgeschriebenen Kamerafahrt angesteuert und die von den einzelnen Kameras (13) aufgenommenen Videodaten in einer durch den Aufnahmeplan vorgegebenen Reihenfolge und insbesondere unter Berücksichtigung der Kamerafahrten zu einem Programm zusammengestellt werden.

14. Verfahren nach Anspruch 13,
**dadurch gekennzeichnet,**
**dass** die Ansteuerung der Kameras und die Zusammenstellung des Programms automatisch gemäß dem zuvor aufgestellten Aufnahmeplan durchgeführt werden.

15. Verfahren nach einem der vorhergehenden Ansprüche,
**dadurch gekennzeichnet,**
**dass** eine Vorrichtung nach einem der nachstehenden Ansprüche verwendet wird.

16. Vorrichtung zur Aufnahme von Videodaten mit
- wenigstens einer an einem Aufnahmeplatz (11) fest installierten, zu unterschiedlichen Einstellungen ansteuerbaren Kamera (13),
- einer vom Aufnahmeplatz (11) räumlich entfernt gelegenen Anzeigeeinrichtung (15), an der ein Bild (17) der Umgebung der Kamera (13) darstellbar ist,
- einer Auswahleinrichtung (25), mittels welcher in dem dargestellten Umgebungsbild (17) zumindest mehrere Bildelemente (19) auswählbar sind,
- einer Steuereinrichtung (27), mittels welcher aus den ausgewählten Bildelementen (19) eine Steuerbefehlssequenz für die Kamera (13) erzeugbar ist, und
- einer Datenübertragungsstrecke (29), über welche die Steuerbefehlssequenz an die Kamera (13) zur Ausführung der Kamerafahrt übermittelbar ist.

17. Vorrichtung nach Anspruch 16,
**dadurch gekennzeichnet,**
**dass** die Anzeigeeinrichtung (15) und die Steuereinrichtung (27) Bestandteil einer Zentralstation (31) sind, der eine Mehrzahl von Aufnahmeplätzen (11) mit jeweils wenigstens einer Kamera (13) zugeordnet ist.

18. Vorrichtung nach Anspruch 16 oder 17,
**dadurch gekennzeichnet,**
**dass** eine Mehrzahl von Kameras (13) vorgesehen ist, die im Rahmen eines Aufnahmeplans von einer Zentralstation (31) aus jeweils gemäß einer zuvor festgelegten, durch den Aufnahmeplan vorgeschriebenen Kamerafahrt ansteuerbar sind, wobei die Zentralstation (31) derart ausgebildet ist, dass die von den einzelnen Kameras (13) aufgenommenen Videodaten in einer durch den Aufnahmeplan vorgegebenen Reihenfolge und insbesondere unter Berücksichtigung der Kamerafahrten zu einem Programm zusammenstellbar sind.

19. Verfahren nach Anspruch 18,
**dadurch gekennzeichnet,**
**dass** die Ansteuerung der Kameras und die Zusammenstellung des Programms automatisch gemäß dem zuvor aufgestellten Aufnahmeplan durchführbar ist.

20. Vorrichtung nach einem der Ansprüche 16 bis 19,
**dadurch gekennzeichnet,**
**dass** die Anzeigeeinrichtung (15) einen Bildschirm oder Monitor umfasst.

21. Vorrichtung nach einem der Ansprüche 16 bis 20,
**dadurch gekennzeichnet,**
**dass** die Steuereinrichtung (27) einen Computer umfasst, insbesondere einen PC.

22. Vorrichtung nach einem der Ansprüche 16 bis 21,
**dadurch gekennzeichnet,**
**dass** die Auswahleinrichtung (25) wenigstens ein Computerperipheriegerät umfasst, insbesondere eine Tastatur und/oder eine Maus.

23. Vorrichtung nach einem der Ansprüche 16 bis 22,
dadurch gekennzeichne t,
dass die Datenübertragungsstrecke in Form einer Telekommunikationsverbindung vorgesehen ist, die insbesondere ein bestehendes Mobilfunknetz und/oder Telefonfestnetz (39) umfasst.

24. Vorrichtung nach einem der Ansprüche 16 bis 23,
**dadurch gekennzeichnet,**
**dass** die Kamera (13) um eine vertikale Achse a und/oder einer horizontale Achse b schwenkbar gelagert ist.

25. Vorrichtung nach einem der Ansprüche 16 bis 24,
**dadurch gekennzeichnet,**
**dass** die Kamera (13) wenigstens eine Nachweiseinrichtung (33) umfasst, mit der ein als Bezugspunkt für eine veränderbare Kameraeinstellung dienender Referenzwert detektierbar ist.

26. Vorrichtung nach einem der Ansprüche 16 bis 25,
**dadurch gekennzeichnet,**
**dass** sie gemäß einem Verfahren nach einem der Ansprüche 1 bis 14 betrieben oder verwendet wird.
